# EUROPEAN PATENT APPLICATION

(11) **EP 4 790 369 A1**
(43) Date of publication of application: **12.08.2026**
(21) Application number: 26155683.1
(22) Date of filing: 02.02.2026
(51) Int. Cl.: G01F 7/00, G01F 15/00, G05D 7/00, G01F 1/00, F16K 17/02

(54) **HIGH BYPASS FLUID QUALITY CONTROL SYSTEM**

(30) Priority: 06.02.2025 US 202563754835 P; 05.12.2025 US 202519410370
(71) Applicant: Gammon Technical Products, Inc., Manasquan, New Jersey 08736-0400 (US)
(72) Inventor: Gammon, James H., Manasquan, New Jersey, 08736 (US)
(74) Representative: Meissner Bolte Partnerschaft mbB

(57) **Abstract**

A fluid flow system having a bypass system with a flow cell having one or more sensors is disclosed. The bypass system causes a fluid flow rate past sensors to be at a constant velocity, regardless of the flow rate through other portions of the fluid flow system. The bypass system allows for the flow rate of fluid through the fluid flow system to be variable, while maintaining a constant velocity of fluid flow through the flow cell having one or more sensors. In this way, the fluid being measured by the sensors for pressure, force, acoustics, vibration, strain, load, flow rate, velocity, viscosity, temperature, density, presence of contaminants, or any other property or condition commonly monitored in fluid systems, has a substantially constant velocity, removing a variable that the sensors must account for.

## Description

### CROSS-REFERENCE TO RELATED APPLICATIONS

The present patent application claims priority to U.S. Provisional Patent Application Serial No. 63/754,835, filed on February 6, 2025, the entire disclosure of which is hereby incorporated herein by reference.

### FIELD OF THE INVENTION

The present disclosure relates to a control system, and more particularly, to a high bypass fluid quality control system for regulating fluid flow characteristics within a system.

### BACKGROUND OF THE INVENTION

Fluid distribution systems commonly found within industrial and transportation fields, such as hydraulic systems, for example, routinely operate across wide ranges of fluid flow rate and velocity. In such environments, sensors are deployed in or proximate to the flowing stream. The sensors are typically used to monitor conditions of the flow of fluid such as pressure, force, acoustics, vibration, strain, load, flow rate, velocity, viscosity, temperature, density, presence of contaminants, or any other property or condition commonly monitored in fluid systems. However, when flowing a fluid through a hydraulic system at variable flow rates, sensing of the conditions of the fluid can be difficult.

Contaminants and/or discontinuous phases of the fluid flowing through the fluid system behave differently with varying velocity. The varying velocity may result in more or less turbulent flow which makes obtaining consistent, accurate data with a monitor or sensor complicated and expensive. Additionally, more or less turbulent flow can bias sensor outputs, increase measurement noise, and necessitate complex calibration and signal processing.

Conventional techniques address portions of these challenges but do not directly solve the aforementioned issue. Bypass arrangements are known in flow metering systems, where a portion of the main flow is routed through a secondary path containing a measuring element, often driven by a pressure drop across a constriction to infer total flow. However, these systems still suffer from unpredictable fluid flow rates through the sensing portion of the system. Alternatively, control valves, including back-pressure and servo-actuated devices, are employed to regulate delivery conditions such as overall flow rate or pressure. However, these prior art approaches are primarily concerned with metering or controlling bulk flow characteristics for an entire flow system, which causes system inefficiencies, pressure buildup, and unnecessary restriction of flow through the system as a whole.

As such, it is desired to have a fluid flow system that maximizes the efficiency of a flow system while allowing for a sensor to capture accurate, constant data of the fluid.

### SUMMARY OF THE INVENTION

In harmony and accordance with the present disclosure, a fluid flow system that utilizes a bypass system and maximizes the efficiency of the flow system while achieving a substantially constant velocity of the flow through a flow cell of the fluid flow system having one or more sensor, allowing for the sensors to capture accurate, constant data of the fluid, has surprisingly been discovered.

The fluid flow system having a bypass system that allows the fluid flowing through the system to have a substantially constant velocity of flow through a flow cell having one or more sensors cures the deficiency of prior art. The bypass system, in combination with a rate of flow limiting valve (or similar) controlling the flow rate through the flow cell, causes a fluid flow rate past sensors to be at a constant velocity, regardless of the flow rate through other portions of the fluid flow system. This bypass system is designated as a high bypass system (HBS). The HBS allows for the flow rate of fluid through the fluid flow system to be variable, while maintaining a constant velocity of fluid flow through the flow cell having one or more sensors. In this way, the fluid being measured by the sensors for pressure, force, acoustics, vibration, strain, load, flow rate, velocity, viscosity, temperature, density, presence of contaminants, or any other property or condition commonly monitored in fluid systems, has a substantially constant velocity, removing a variable that the sensors must account for. This allows for the sensors to collect more accurate, consistent data of fluid properties while maintaining the efficiency of the fluid flow system as a whole.

In an embodiment, a fluid system comprises an inlet conduit; a high bypass system fluidly connected to the inlet conduit, the high bypass system further having a first branch fluidly connected to the inlet conduit, the first branch having a flow cell formed within the first branch, wherein one or more sensors are disposed within the flow cell; and a control valve disposed downstream of the flow cell; and a second branch fluidly connected to the inlet conduit, the second branch further having a bypass valve; and an outlet conduit fluidly connected to the high bypass system; wherein the control valve is configured to maintain a target maximum flow rate of flow through the first branch, and wherein the bypass valve is configured to allow flow through the second branch when a pressure in the high bypass system exceeds a calibrated pressure threshold corresponding to the target maximum flow rate of the control valve.

In another embodiment, a high bypass system for use in a fluid system, the high bypass system comprises a first branch fluidly connected to the fluid system, the first branch further having a flow cell formed within the first branch, wherein one or more sensors are disposed within the flow cell; and a control valve disposed downstream of the flow cell; and a second branch fluidly connected to the fluid system, the second branch further having a bypass valve; wherein the control valve is configured to maintain a target maximum flow rate of flow through the first branch, and wherein the bypass valve is configured to allow flow through the second branch when a pressure in the high bypass system exceeds a calibrated pressure threshold corresponding to the target maximum flow rate of the control valve.

In an embodiment of the disclosure, a flow straightener disposed in the fluid system upstream from the flow cell.

In an embodiment of the disclosure, an upstream junction in fluid communication with the inlet conduit and dividing flow between the first branch and the second branch.

In an embodiment of the disclosure, a downstream junction in fluid communication with the outlet conduit and recombining flow from the first branch and the second branch.

In an embodiment of the disclosure, the flow cell has a diameter of 2 inches.

In an embodiment of the disclosure, the one or more sensors monitor fluid properties concurrently.

In an embodiment of the disclosure, the one or more sensors include a fluid quality sensor suite configured to measure at least one of pressure, temperature, viscosity, density, acoustic attenuation, vibration, strain, flow rate, velocity, presence of contaminants, or presence of discontinuous phases.

In an embodiment of the disclosure, the control valve is a rate of flow limitation control further comprising a flow regulating component disposed in the flow cell, a flow sensor disposed upstream of the flow regulating component in the flow cell, and a controller operatively connected to the flow sensor and the flow regulating component.

In an embodiment of the disclosure, the bypass valve is a backpressure valve, and wherein the backpressure valve is configured to open proportionally to a differential between the pressure in the high bypass system and the calibrated pressure threshold.

In yet another embodiment, a method of operating a high bypass system in a fluid system, the method comprises providing a high bypass system, the high bypass system having a first branch fluidly connected to the fluid system, the first branch further having a flow cell formed within the first branch, wherein one or more sensors are disposed within the flow cell; and a control valve disposed downstream of the flow cell; and a second branch fluidly connected to the fluid system, the second branch further having a bypass valve; configuring the control valve to maintain a target maximum flow rate of flow through the first branch; and configuring the bypass valve to allow flow through the second branch when a pressure in the high bypass system exceeds a calibrated pressure threshold corresponding to the target maximum flow rate of the control valve.

In an embodiment of the disclosure, the method further comprises configuring the bypass valve to open proportionally to a differential between the pressure in the high bypass system and the calibrated pressure threshold.

### BRIEF DESCRIPTION OF THE DRAWINGS

The above advantages of the invention will become readily apparent to those skilled in the art from reading the following detailed description of an embodiment of the invention in the light of the accompanying drawings, in which:
FIG. 1 is a schematic flow diagram of a high bypass system having a flow cell in a flow system according to an embodiment of the disclosure.
FIG. 2 is a schematic flow diagram of internal components of the flow cell of the high bypass system of FIG. 1.

### DETAILED DESCRIPTION OF AN EMBODIMENT

The following description of technology is merely exemplary in nature of the subject matter, manufacture and use of one or more inventions, and is not intended to limit the scope, application, or uses of any specific invention claimed in this application or in such other applications as may be filed claiming priority to this application, or patents issuing therefrom. Regarding methods disclosed, the order of the steps presented is exemplary in nature, and thus, the order of the steps can be different in various embodiments. "A" and "an" as used herein indicate "at least one" of the item is present; a plurality of such items may be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that may arise from ordinary methods of measuring or using such parameters.

All documents, including patents, patent applications, and scientific literature cited in this detailed description are incorporated herein by reference, unless otherwise expressly indicated. Where any conflict or ambiguity may exist between a document incorporated by reference and this detailed description, the present detailed description controls.

Although the open-ended term "comprising," as a synonym of non-restrictive terms such as including, containing, or having, is used herein to describe and claim embodiments of the present technology, embodiments may alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that may be recited in the art, even though element D is not explicitly described as being excluded herein.

As referred to herein, disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter may define endpoints for a range of values that may be claimed for the parameter. For example, if Parameter X is exemplified herein to have value A and also exemplified to have value Z, it is envisioned that Parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X may have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above", "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

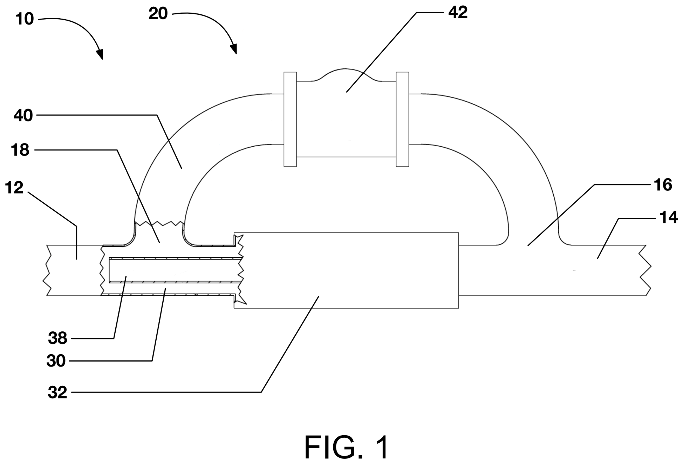

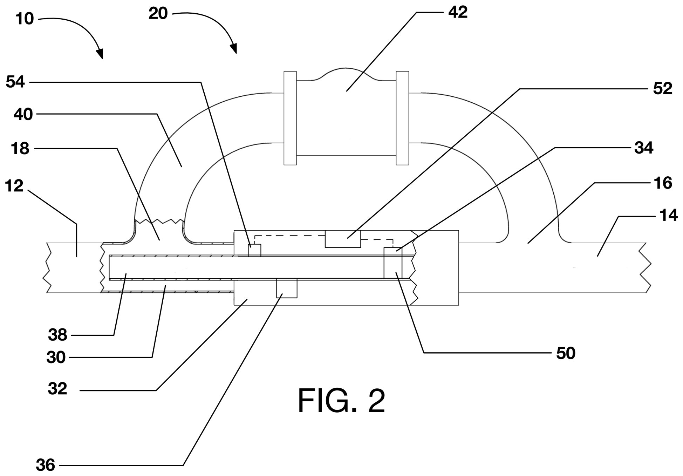

The present disclosure relates to systems and methods that minimize variability in a velocity of a fluid flowing through a monitored region of a fluid system 10. In the embodiment shown in FIGS. 1-2, a high bypass system (HBS) 20 is configured to cause a flow past one or more sensors 36 to be at a substantially constant velocity, regardless of variations in total system flow rate. In this way, turbulence and velocity-dependent sensor response is minimized, and obtaining and/or recording of consistent and accurate sensor data is facilitated.

FIGS. 1-2 schematically illustrate an embodiment of the fluid system 10 incorporating the HBS 20. The fluid system 10 includes an inlet conduit 12 in fluid communication with and configured to receive a flow of a fluid from the fluid system 10 and an outlet conduit 14 in fluid communication with the fluid system 10 and configured to discharge the flow downstream of the HBS 20 to the fluid system 10. The HBS 20 is fluidly connected between the inlet conduit 12 and the outlet conduit 14 and divides the incoming flow in the inlet conduit 12 into two parallel flow paths that recombine downstream in the outlet conduit 14.

The inlet conduit 12 and the outlet conduit 14 may be configured to receive a flow of fluid from the fluid system 10 using any desired configuration. The inlet conduit 12 and the outlet conduit 14 may also be comprised of any material as desired, including, but not limited to, metal, plastic, rubber, or any other material as desired. The inlet conduit 12 and the outlet conduit 14 may also be comprised of the same material as a remainder of the fluid system 10. The inlet conduit 12 and the outlet conduit 14 may also be of any size as desired. In an exemplary embodiment, the inlet conduit 12 and the outlet conduit 14 may be 4 inches (100 mm) in diameter and capable of conveying up to about 1,000 gallons per minute (3,785 lpm) of flow. However, it should be noted that a diameter of the conduits 12, 14 and a flow rate that the conduits 12, 14 are able to deliver may be adjusted as desired.

FIGS. 1-2 further illustrate the HBS 20. In an embodiment, the HBS 20 may be provided as a modular spool assembly with flanged or welded connections configured to be installed between the inlet conduit 12 and the outlet conduit 14. In other embodiments, the HBS 20 may be integrally formed within the fluid system 10. It should be noted that the HBS 20 may be fluidly connected to the inlet conduit 12 and the outlet conduit 14 of the fluid system 10 using any desired method. In distributed installations such as airport fueling networks, for example, multiple HBS's 20 may be deployed at different points and their outputs aggregated for facility-wide monitoring and analytics.

In an embodiment, the HBS 20 includes a first branch 30 fluidly connected to the inlet conduit 12. The first branch 30 comprises a flow cell 32 formed within the first branch 30 and a control valve 34 disposed downstream of the flow cell 32. The flow cell 32, in an embodiment, may be integrally formed within the first branch 30. In another embodiment, the flow cell 32 may be a separate component that is fluidly connected to the first branch 30 using any desired method. However, it should be noted that the flow cell 32 may have any size, geometry, and configuration as desired to facilitate the flow of the fluid through the flow cell 32. The first branch 30, as well as the flow cell 32, may be comprised of any material as desired, such as, but not limited to, metal, plastic, rubber, or any other material as desired. The first branch 30 and the flow cell 32 may also have any diameter and allow for any flow rate through the first branch 30 and the flow cell 32 as desired. In an exemplary embodiment, the first branch 30 has a diameter of 4 inches and the flow cell 32 has a diameter of 2 inches. However, the diameter of the first branch 30 and the flow cell 32 may be adjusted as determined necessary by one skilled in the art.

The flow cell 32 houses one or more sensors 36 disposed within the flow cell 32. The sensors 36 may be configured to monitor a property or condition of the flowing fluid, such as pressure, temperature, viscosity, density, acoustic attenuation, vibration, strain, flow rate, velocity, or presence of contaminants or discontinuous phases. However, it is important to note that any type of sensor measuring any property or condition of the fluid flowing through the fluid system 10 may be disposed within the flow cell 32 as desired. Placement of the sensors 36 within the flow cell 32 is selected to reside in a stabilized region of the velocity profile to improve repeatability and reduce turbulence-induced variability. In some embodiments, multiple ones of the sensors 36 are housed within a single flow cell 32 to monitor diverse properties concurrently. In other embodiments, multiple ones of the flow cells 32 having one or more sensors 36 are placed in series within the first branch 30 of the HBS 20.

The flow cell 32 may also include ports for sensor insertion, optical windows, and/or inline sensor cartridges. Provisions for purge, drain, sampling, and calibration injection may be incorporated to facilitate commissioning and routine verification of the controlled flow condition. In refueling environments, grounding, bonding, and anti-static measures may be incorporated in accordance with applicable industry standards.

The control valve 34 is configured to maintain a target maximum flow rate of flow through the first branch 30. The control valve 34 may be configured to maintain the target maximum flow rate of flow using any desired method. The control valve 34 may also be any type of control valve as desired. For example, the control valve 34 may be realized as a diaphragm-operated, pilot-controlled rate-of-flow valve that maintains a set flow independent of upstream pressure variations within design limits. In other embodiments, an electronic actuator of the control valve 34 receives a closed-loop signal from a flow meter disposed in the first branch 30 and modulates to hold the setpoint.

In an embodiment, the control valve 34 is a rate of flow limitation control. In this embodiment, the rate of flow limitation control for the flow cell 32 includes a flow regulating component 50, such as a variable orifice, needle valve, or proportional control valve, as non-limiting examples, disposed inline with the flow cell 32. The flow regulating component 50 is operatively coupled to a controller 52 configured to maintain the target maximum flow rate irrespective of upstream pressure fluctuations or downstream load variations. The controller 52 may be any controller as desired by one skilled in the art. The rate of flow limitation control may also include a flow sensor 54 that continuously measures instantaneous flow and provides a feedback signal to the controller 52. The flow sensor 54 may be any flow sensor as desired. The controller 52 compares the measured flow by the flow sensor 54 to the target maximum flow rate and actuates the flow regulating component 50 to reduce the effective flow when the measured flow exceeds the limit, and to relax the restriction when the measured flow falls below the limit, thereby establishing closed-loop control that enforces the target maximum flow rate while preserving stability and responsiveness.

In some embodiments, a flow straightener 38 is disposed upstream of the flow cell 32 to minimize flow disturbances and to create a more uniform, laminar velocity profile by attenuating swirl and turbulence. The flow straightener 38 may take any form as desired. In the embodiment shown, the flow straightener 38 is a conduit having a diameter smaller than a diameter of the first branch 30. In other embodiments, the flow straightener 38 may take a form of a tube bundle or honeycomb array sized with an appropriate length-to-hydraulic-diameter ratio, one or more perforated plates to redistribute momentum, and/or axial guide vanes. The flow straightener 38 may be integrated into an inlet section of the flow cell 32 or provided as a separate upstream component. In certain installations, the flow straightener 38 may simply comprise an extended straight-run length of conduit upstream of the flow cell 32 and the sensors 36 where space and pressure drop budgets permit.

The HBS 20 further includes a second branch 40 fluidly connected to the inlet conduit 12 in parallel with the first branch 30. The first branch 30 and the second branch 40 are configured so that the first branch 30 and the second branch 40 may both substantially receive the flow from the inlet conduit 12. The flow into the HBS 20 from the inlet conduit 12 may split between the first branch 30 and the second branch 40 at a junction 18 upstream of the first branch 30 and the second branch 40. The first branch 30 and the second branch 40 later recombine at a downstream junction 16 that connects the first branch 30 and the second branch 40 with the outlet conduit 14. The downstream junction 16 may be configured with a diffuser or mixing section (not shown) to limit recirculation and pressure oscillations upon recombination.

The second branch 40 may be comprised of any material as desired, such as, but not limited to, metal, plastic, rubber, or any other material as desired. The second branch 40 may also have any diameter and allow for any flow rate through the second branch 40 as desired. In an exemplary embodiment, the second branch 40 has a diameter of 4 inches. However, the diameter of the second branch 40 may be adjusted as determined necessary by one skilled in the art, and may be the same as or different from the diameter of the first branch 30.

The second branch 40 also comprises a bypass valve 42. The bypass valve 42 may be any bypass valve as desired. In an exemplary embodiment, the bypass valve 42 may be a back-pressure valve or differential-pressure regulating valve configured to remain substantially closed until a threshold differential corresponding to the target maximum flow rate of the control valve 34 is reached, after which the bypass valve 42 opens progressively to permit excess flow to flow through the second branch 40.

In an embodiment, the bypass valve 42 is a backpressure valve fluidly coupled to the second branch 40 of the HBS 20. In this embodiment, the backpressure valve is configured to open when pressure in the HBS 20 exceeds a calibrated threshold corresponding to the target maximum flow rate of the control valve 34. The backpressure valve thereby diverts fluid through the second branch 40 of the HBS 20 when the pressure in the HBS 20 exceeds the calibrated threshold corresponding to the target maximum flow rate of the control valve 34. The backpressure valve may be any backpressure valve as desired. The backpressure valve may be a spring-loaded diaphragm or spool valve with an adjustable setpoint, as non-limiting examples. In these passive embodiments, the backpressure valve opens proportionally to the differential between upstream pressure and its setpoint. The backpressure valve, however may be a pilot-operated valve receiving a control signal from the controller 52, or another embodiment having an active implementation of the backpressure valve, if desired.

Therefore, in an embodiment, the control valve 34 maintains a substantially constant flow rate at the target maximum flow rate through the first branch 30 and the flow cell 32. When total flow of the fluid system 10 is at or below the target maximum flow rate maintained by the control valve 34, substantially all flow may pass through the first branch 30 and the bypass valve 42 remains closed. When the total flow through the fluid system 10 would otherwise cause the velocity through the first branch 30 to exceed the target maximum flow rate and increases the pressure in the HBS 20 to exceed the calibrated threshold corresponding to the target maximum flow rate of the control valve 34, the bypass valve 42 opens proportionally to the differential between upstream pressure and its setpoint to allow a portion of the fluid to flow through the second branch 40, thereby preserving the constant velocity condition through the flow cell 32 without interrupting the flow of the total fluid system 10.

Sizing of the first branch 30, the second branch 40, and the flow cell 32 may differ as desired to maintain the targeted setpoint with acceptable pressure drops and to avoid cavitation. Smooth-radius bends and favorable junction geometries may be employed to minimize secondary flow generation. Pressure, temperature, and flow indicators may be installed across both branches to monitor setpoint adherence, detect fouling or misadjustment, and provide diagnostics for maintenance.

A method of operating the HBS 20 includes providing the first branch 30 with the flow cell 32 and the control valve 34 disposed downstream of the flow cell 32, providing the second branch 40 with the bypass valve 42, configuring the control valve 34 to maintain the target maximum flow rate through the first branch 30, and configuring the bypass valve 42 to open when pressure in the HBS 20 exceeds a calibrated threshold corresponding to the target maximum flow rate of the control valve 34, allowing flow through the second branch 40 when total system flow would otherwise cause the velocity through the first branch 30 to exceed the predetermined constant value. During operation, when total flow is below the target maximum flow rate, substantially all flow passes through the first branch 30 and for monitoring by the sensors 36. As total flow increases above the target maximum flow rate, the bypass valve 42 progressively opens proportionally to the differential between upstream pressure and its setpoint to convey the excess flow of the fluid through the second branch 40, thereby preserving constant velocity through the flow cell 32. The branches 30, 40 recombine at the downstream junction 16 and discharge through the outlet conduit 14 without limiting overall system capacity.

In an exemplary embodiment, the fluid system 10 is configured as a jet fuel system used for aircraft refueling. The inlet conduit 12 and the outlet conduit 14 may be nominally 4 inches (100 mm) in diameter and capable of conveying up to about 1,000 gallons per minute (3,785 lpm). At any given time, system flow may be anywhere from about 150 gpm (568 lpm) to about 800 gpm (2,825 lpm), with corresponding bulk line velocities from about 3.75 feet per second to about 25 feet per second (1.14 to 7.62 meters per second). The first branch 30 may incorporate a 2-inch diameter flow cell 32 instrumented with a water detection sensor. The control valve 34 is adjusted to maintain a target maximum flow rate, for example, about 150 gpm through the first branch 30, which corresponds to approximately 19 feet per second in a 2-inch line. The bypass valve 42 is configured to remain closed at a pressure below or equal to a pressure corresponding to 150 gpm of jet fuel flow through the fluid system 10. If total system flow is about 600 gpm, the first branch 30 conveys about 150 gpm through the flow cell 32 while the second branch 40 conveys the remaining about 450 gpm via the bypass valve 42. This is because the bypass valve 42 would open proportionally to the differential between upstream pressure and its setpoint at the pressure corresponding to 150 gpm of jet fuel flow through the fluid system 10. In this way, the flow seen by the sensor 36 remains at substantially the same velocity across a wide operating envelope. This allows for the water detection sensor to take measurements and collect data from the fluid flowing through the flow cell 32 with the fluid flowing at the constant velocity of 150 gpm. This allows for the water detection sensor to take measurements of the fluid flowing through the flow cell 32 with velocity removed as a variable.

Although the embodiments described herein emphasize jet fuel handling systems and water detection sensors that may be sensitive to velocity and turbulence, the concepts are applicable to a wide range of fluids and gasses, including other hydrocarbons, hydraulic fluids, water, and process liquids, and a wide range of sensors, including other optic, ultrasound, or similar sensing technologies. By maintaining a substantially constant velocity through the first branch 30, the system enhances measurement repeatability, reduces false positives and negatives in contamination detection, simplifies sensor 36 calibration and interpretation, and allows high peak flows to proceed unimpeded through the second branch 40.

From the foregoing description, one ordinarily skilled in the art can easily ascertain the essential characteristics of this invention and, without departing from the spirit and scope thereof, can make various changes and modifications to the invention to adapt it to various usages and conditions.

## Claims

1. A fluid system comprising:
an inlet conduit;
a high bypass system fluidly connected to the inlet conduit;
an outlet conduit fluidly connected to the high bypass system, the high bypass system further comprising:
a first branch fluidly connected to the inlet conduit, the first branch comprising:
a flow cell formed within the first branch, wherein one or more sensors are disposed within the flow cell; and
a control valve disposed downstream of the flow cell; and
a second branch fluidly connected to the inlet conduit, the second branch further comprising a bypass valve; and
wherein the control valve is configured to maintain a target maximum flow rate of flow through the first branch, and wherein the bypass valve is configured to allow flow through the second branch when a pressure in the high bypass system exceeds a calibrated pressure threshold corresponding to the target maximum flow rate of the control valve.

2. The fluid system of claim 1, further comprising a flow straightener disposed in the fluid system upstream from the flow cell.

3. The fluid system of claim 1, further comprising an upstream junction in fluid communication with the inlet conduit and dividing flow between the first branch and the second branch.

4. The fluid system of claim 1, further comprising a downstream junction in fluid communication with the outlet conduit and recombining flow from the first branch and the second branch.

5. The fluid system of claim 1, wherein the flow cell has a diameter of 2 inches.

6. The fluid system of claim 1, wherein the one or more sensors monitor fluid properties concurrently.

7. The fluid system of claim 6, wherein the one or more sensors include a fluid quality sensor suite configured to measure at least one of pressure, temperature, viscosity, density, acoustic attenuation, vibration, strain, flow rate, velocity, presence of contaminants, or presence of discontinuous phases.

8. The fluid system of claim 1, wherein the control valve is a rate of flow limitation control further comprising a flow regulating component disposed in the flow cell, a flow sensor disposed upstream of the flow regulating component in the flow cell, and a controller operatively connected to the flow sensor and the flow regulating component.

9. The fluid system of claim 1, wherein the bypass valve is a backpressure valve, and wherein the backpressure valve is configured to open proportionally to a differential between the pressure in the high bypass system and the calibrated pressure threshold.

10. The fluid system of claim 1, wherein inlet conduit and the outlet conduit a diameter of 100 mm.

11. The fluid system of claim 1, wherein the system flow is from 0,00946 m³/s (150 gpm) to 0,05047 m³/s (800 gpm).

12. The fluid system of claim 1, wherein the fluid system is configured as a jet fuel system used for aircraft refueling.

13. A high bypass system for use in a fluid system according to one of the claims 1 to 9.

14. A method of operating a high bypass system in a fluid system, the method comprising:
providing a high bypass system according to claim 10;
configuring the control valve to maintain a target maximum flow rate of flow through the first branch; and
configuring the bypass valve to allow flow through the second branch when a pressure in the high bypass system exceeds a calibrated pressure threshold corresponding to the target maximum flow rate of the control valve.

15. The method of claim 11, wherein the method further comprises configuring the bypass valve to open proportionally to a differential between the pressure in the high bypass system and the calibrated pressure threshold.
